Europäisches Patentamt

European Patent Office

Office européen des brevets

(11) Numéro de publication: **0 350 095**
**A1**

## (12) DEMANDE DE BREVET EUROPEEN

(21) Numéro de dépôt: 89201674.2

(51) Int. Cl.⁴: **G01S 13/34**

(22) Date de dépôt: **26.06.89**

(30) Priorité: **01.07.88 FR 8808920**

(43) Date de publication de la demande:
**10.01.90 Bulletin 90/02**

(84) Etats contractants désignés:
**DE FR GB**

(71) Demandeur: TELECOMMUNICATIONS
RADIOELECTRIQUES ET TELEPHONIQUES
T.R.T.
88, rue Brillat Savarin
F-75013 Paris(FR)

(84) FR

Demandeur: N.V. Philips'
Gloeilampenfabrieken
Groenewoudseweg 1
NL-5621 BA Eindhoven(NL)

(84) DE GB

(72) Inventeur: Allezard, Roland Société Civile
S.P.I.D.
209, rue de l'Université
F-75007 Paris(FR)

(74) Mandataire: Pyronnet, Jacques et al
Société Civile S.P.I.D. 209 rue de l'Université
F-75007 Paris(FR)

(54) **Système radar radioaltimétrique à onde continue modulée en fréquence.**

(57) Le radar, de type FM/CW, émet une onde à peu près linéaire en fréquence, entre deux fréquence $f_1$ et $f_2$ et fournit un premier signal de battement ($Fb_1$) entre ondes émise et reçue ; il est conçu pour la mesure d'altitude h par mesure de la rotation totale de phase. Selon l'invention, le radar fournit un deuxième signal de battement ($Fb_2$) en quadrature avec le premier ; les signaux $Fb_1$ et $Fb_2$ sont numérisés (23 à 26) et des moyens de comparaison (36) comparent les échantillons successifs de $Fb_1$ et $Fb_2$, puis des moyens de calcul (37) en déduisent par incrémentations-décrémentations successives le nombre de traversées des axes du plan des phases dans un sens prédéterminé diminué du nombre de traversées en sens inverse (nombre résultant m). L'altitude calculée h est proportionnelle à m.

FIG.6

Xerox Copy Centre

## Système radar radioaltimétrique à onde continue modulée en fréquence

L'invention concerne un système radar du type à modulation de fréquence, fournissant à une antenne émettrice une onde continue dont la fréquence f varie de façon à peu près linéaire d'une fréquence inférieure $f_1$ à une fréquence supérieure $f_2$ telles que $f_2-f_1 = \Delta f$, comportant un récepteur homodyne relié à une antenne réceptrice pour fournir un premier signal de battement $Fb_1$ entre ondes émise et reçue après réflexion, conçu pour la mesure d'altitude h par mesure de la rotation totale de phase (comptage du nombre de passages par zéro) dudit signal de battement $Fb_1$ pendant la durée $\Delta t$ de chaque excursion $\Delta f$ de la fréquence émise.

Lorsqu'on réalise un radioaltimètre, destiné à être embarqué sur un aéronef, on souhaite généralement pouvoir mesurer des altitudes selon une plage très étendue de distances et, si possible, allant de l'altitude zéro jusqu'à plus de 10.000 m. Deux méthodes sont actuellement employées de façon habituelle pour réaliser un radioaltimètre radioélectrique. La première méthode consiste en la mesure directe du temps de propagation d'une impulsion radioélectrique ou d'un train d'impulsions codées selon un code par exemple de type PN. Ce type de matériel fonctionne bien aux altitudes élevées mais devient critique dès qu'il est nécessaire de mesurer des altitudes très basses à cause de la largeur non négligeable des impulsions et des différents vacillements. L'autre méthode, qui est utilisée selon la présente invention, consiste en la mesure indirecte du temps de propagation par l'intermédiaire de la fréquence de battement obtenue par la corrélation entre une onde émise, modulée linéairement en fréquence, et le signal reçu du sol. Ce type de matériel, dit FM/CW, au moins lorsqu'il comporte deux antennes distinctes, une pour l'émission l'autre pour la réception comme c'est le cas pour la présente invention, est mieux adapté que le radar à impulsions indiqué ci-dessus à la mesure des basses altitudes mais pose des problèmes de précision insuffisante et surtout de limitation pour la mesure des altitudes élevées. Dans ce dernier cas, en effet, le signal d'écho reçu du sol est très affaibli et pour que le signal de battement soit toujours identifiable il faut habituellement que la linéarité de modulation du signal émis soit très bonne et que le bruit de phase du signal de battement soit faible. Le Radar-radioaltimètre FM/CW est limité, aux grandes altitudes, à partir du moment où le bruit de la phase du signal de battement entre émission et réception provoqué par les bruits et autres non linéarités est de l'ordre de $2\pi$.

Le signal reçu d'un écho de sol est la somme d'un grand nombre d'échos indépendants mais où domine la notion de phase liée au voisinage du pied de la droite perpendiculaire au sol passant par l'altimètre. Cette somme très fluctuante que l'on peut représenter par un vecteur $\vec{OS}$ peut se résoudre en la somme, dans le plan des phases, d'un vecteur moyen $\vec{OA}$ lentement variable et d'une somme aléatoire de vecteurs se déplaçant dans une zone d'autant plus grande, par rapport au module du vecteur $\vec{OA}$ que, pour un matériel donné, l'altitude est grande. La partie principale du spectre de battement des altimètres à modulation de fréquence est liée au vecteur moyen $\vec{OA}$. Soit un altimètre qui, a l'instant $t_1$ auquel la fréquence émise est $f_1$, est situé à la distance h du point moyen A correspondant à l'écho de sol principal, qui fournit le vecteur moyen $\vec{OA}$ précité. La différence de phase $\phi_1$ entre le signal émis et le signal reçu peut s'écrire :

$$\phi_1 = 2\pi \frac{2h}{c} f_1 + \psi \qquad (1)$$

avec :

c : vitesse de l'onde électromagnétique

$\psi$ : l'angle fixe dépendant des circuits de l'altimètre.

De même à un instant $t_2$ très proche de $t_1$, pour la fréquence $f_2$, l'altitude h n'ayant pas varié entre les instants $t_1$ et $t_2$ très rapprochés l'un par rapport à l'autre :

$$\phi_2 = 2\pi \frac{2h}{c} f_2 + \psi \qquad (2)$$

On déduit des relations (1) et (2) la loi des altimètres à modulation de fréquence :

$$\phi_2 - \phi_1 = 2\pi \frac{2h}{c} (f_2-f_1)$$

soit :

$$\Delta\phi = 4\pi \frac{h}{c} \Delta f \qquad (3)$$

La relation (3) est mieux connue sous sa forme dérivée par rapport au temps :

$$fb = \frac{\Delta\phi}{\Delta t} \cdot \frac{1}{2\pi} = 2 \frac{h}{c} \frac{\Delta f}{\Delta t}$$

$$fb = 2 \frac{h}{c} \frac{\Delta f}{\Delta t} \qquad (4)$$

fb désignant la fréquence du signal de battement Fb précité.

La relation (3) est directement utilisable dans les altimètres à comptage de zéros comme c'est le cas pour la présente invention. La relation (3) peut en effet s'écrire, en posant $\Delta\phi = k\pi$ (k entier) :

$$h = k \ \frac{c}{4\Delta f} \qquad (5)$$

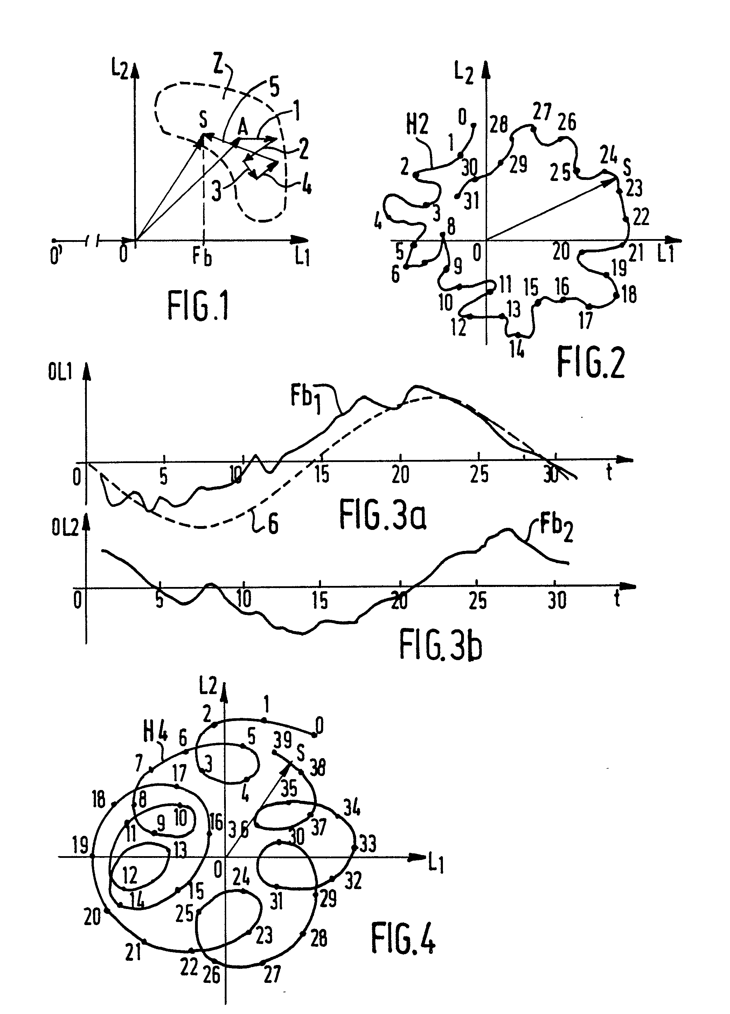

De tels altimètres du type radar FM/CW sont connus notamment de l'ouvrage Radar Handbook, Skolnik, publié en 1970 par Mc Graw-Hill, chapitre 16-18 plus particulièrement page 16-29. Soit l'un de ces altimètres classiques dont les moyens de réception n'effectuent qu'un changement de fréquence, c'est-à-dire ne fournissent qu'un signal de battement $Fb_1$. Ce signal $Fb_1$ peut être représenté par le vecteur $\vec{O}S$ précité (figure 1). Si le vecteur d'oscillation locale $\vec{O}'O$ qui représente l'axe des abscisses dans le plan des phases a une amplitude supérieure à celle du vecteur $\vec{O}S$, le signal de battement est alors pratiquement la projection du vecteur $\vec{O}S$ sur le vecteur d'oscillation locale $\vec{O}'O$. Le point A, dans le plan des phases, décrit en substance un cercle et le point S décrit, par rapport à ce cercle des ondulations aléatoires parasites, qui peuvent ou non constituer des boucles. A la traversée des axes de coordonnées du plan des phases ces ondulations peuvent se traduire par une multiplicité de zéros, à la traversée de chaque axe, au lieu d'un zéro unique, plus précisément par une ou plusieurs paires de zéros parasites supplémentaires. Ceci se produit lorsque le signal de battement est entaché d'un fort bruit de phase. Un altimètre FM/CW à comptage de zéros tel qu'indiqué ci-dessus ne saurait pas différencier des paires de zéros parasites et indiquerait un nombre de zéros trop élevé, soit une altitude mesurée trop grande, conformément à la relation (5). On connaît aussi des radioaltimètres FM/CW à fréquence de battement asservie. Dans ce dernier cas, la fréquence du signal de battement est maintenue à une valeur sensiblement constante et les ondulations aléatoires parasites précitées sont moins marquées, c'est-à-dire que ce type de matériel est plus robuste vis à vis des bruits, mais il devient à son tour inefficace si les erreurs de phases deviennent plus importantes, au point d'aboutir à la formation systématique de boucles pour ce qui est des ondulations aléatoires parasites, cas dans lequel l'égalité (4) qui sert à la détermination de l'altitude h n'est plus utilisable.

Or, dans tous les cas, entre les instants $t_1$ et $t_2$ auxquels les fréquences sont respectivement $f_1$ et $f_2$, quelle que soit la courbe de fréquence f(t) parcourue, les phases du vecteur $\vec{O}S$ existent et ne dépendent pas des valeurs intermédiaires.

Le but de l'invention est de mesurer avec précision la différence de phase totale du signal de battement entre les instants $t_1$ et $t_2$ pour une modulation de fréquence émise, entre les fréquences $f_1$ et $f_2$, qui n'est qu'approximativement linéaire.

Un autre but de l'invention est de pouvoir mesurer des altitudes élevées, au moyen d'un radar FM/CW à mesure de la rotation totale de phase.

Ces buts sont atteints et les inconvénients de l'art antérieur sont atténués grâce au fait que le radar indiqué au premier paragraphe est remarquable en ce qu'il comporte en outre des moyens de réception pour fournir un deuxième signal de battement $Fb_2$ déphasé de $\pi/2$ par rapport audit premier signal $Fb_1$ ainsi que des moyens de numérisation pour échantillonner les signaux $Fb_1$ et $Fb_2$ à une fréquence 1/T de l'ordre de plusieurs dizaines de fois celle des signaux $Fb_1$ et $Fb_2$ et pour convertir ces derniers en signaux numériques $b_1(nT)$ et $b_2(nT)$ respectivement, des moyens de comparaison pour comparer, à chaque période T d'échantillonnage les signes de $b_1(nT)$, $b_1[(n-1)T]$, $b_2(nT)$, $b_2[(n-1)T]$ et des moyens de calcul pour calculer à partir desdites comparaisons des incréments et pour déduire, par incrémentations-décrémentations successives au cours de la durée $\Delta t$, le nombre de fois m, compté algébriquement, que le vecteur électrique $\vec{F}b$ dont $Fb_1$ et $Fb_2$ sont les composantes sur deux axes perpendiculaires a effectué de quarts de tour dans un sens trigonométrique donné, m étant proportionnel à l'altitude à mesurer, conformément à la relation :

$$h = \frac{mc}{8(f_2 - f_1)} \qquad (6)$$

L'idée de départ de l'invention est de suivre avec suffisamment de précision l'évolution du vecteur $\vec{O}S$ dans le plan des phases de façon à pouvoir déterminer la variation de phase totale de ce vecteur entre deux valeurs de fréquence émises. Pour cela, les signaux de battement en quadrature $fb_1$ et $fb_2$ sont échantillonnés à une fréquence assez élevée pour que soient pris en compte tous les passages par zéro successifs de l'un ou l'autre de ces signaux avec, pour chaque zéro, le sens trigonométrique de traversée de l'axe de coordonnée correspondant à chaque zéro, fourni par l'indication complémentaire du signe du signal de battement en quadrature qui ne s'annule pas.

A cet égard, un mode de réalisation préféré de l'invention est remarquable en ce que lesdits moyens de comparaison associent aux signaux $b_1(nT)$ et $b_2(nT)$ les fonctions $B_1(nT)$ et $B_2(nT)$ respectivement qui valent + 1 ou -1 selon que les signaux respectifs $b_1(nT)$ ou $b_2(nT)$ sont positifs ou négatifs, et qu'à chaque période d'échantillonnage T lesdits moyens de calcul effectuent les calculs suivants :

$$B_1(nT).B_1[(n-1)T] = C_1(n,n-1) \qquad (7)$$
$$B_2(nT).B_2[(n-1)T] = C_2(n,n-1) \qquad (8)$$

si $C_1 = -1$ alors :
$$B_1(nT).B_2(nT) + m \rightarrow m \qquad (9)$$
si $C_2 = -1$ alors :
$$-B_1(nT).B_2(nT) + m \rightarrow m \qquad (10)$$

De cette façon, les rotations de phase de $+\pi/2$ puis de $-\pi/2$ précitées dues aux ondulations aléatoires parasites du vecteur $\vec{O}S$ s'annulent l'une l'autre et la rotation totale de phase à $\pi/2$ près qu'on peut qualifier d'utile est prise en compte en totalité.

La description qui suit en regard des dessins annexés, le tout donné à titre d'exemple, fera bien comprendre comment l'invention peut être réalisée.

La figure 1 représente le signal d'écho sous sa forme vectorielle $\vec{O}S$ dans le plan des phases OL1, OL2.

La figure 2 représente l'évolution du vecteur $\vec{O}S$ dans le temps pour une ondulation aléatoire parasite peu marquée.

Les figures 3a et 3b représentent, en fonction du temps, les projections du vecteur $\vec{O}S$ de la figure 2 sur les axes OL1 et OL2 respectivement.

La figure 4 représente l'évolution du vecteur $\vec{O}S$ dans le temps pour une ondulation aléatoire parasite assez marquée.

Les figures 5a et 5b représentent, en fonction du temps, les projections du vecteur $\vec{O}S$ de la figure 4 sur les axes OL1 et OL2 respectivement.

La figure 6 est le schéma synoptique d'un mode de réalisation du sytème radar radioaltimétrique selon l'invention.

La figure 7 représente l'implantation d'une ligne à retard sur le radar de la figure 6.

Sur la figure 1, on a représenté, avec interruption, en $\vec{O}'O$ le vecteur d'oscillation locale qui symbolise l'onde d'émission d'un radar radioaltimétriique FM/CW. Le vecteur $\vec{O}'O$ est fixe et confondu avec l'axe des abscisses du plan des phases OL1, l'axe des ordonnées étant OL2. Dans le plan OL1, OL2 on a représenté le signal reçu d'un écho de sol sous la forme du vecteur $\vec{O}S$ en général petit devant $\vec{O}'O$ qui est la somme d'un vecteur moyen $\vec{O}A$ lentement variable que l'on cherche à identifier et d'une somme aléatoire de vecteurs 1, 2, 3, 4, 5, qui se déplacent dans une zone Z délimitée par un trait interrompu pour une valeur donnée du temps t, d'autant plus grande, $\vec{}$par rapport au module du vecteur OA que, pour un matériel donné, l'altitude est grande.

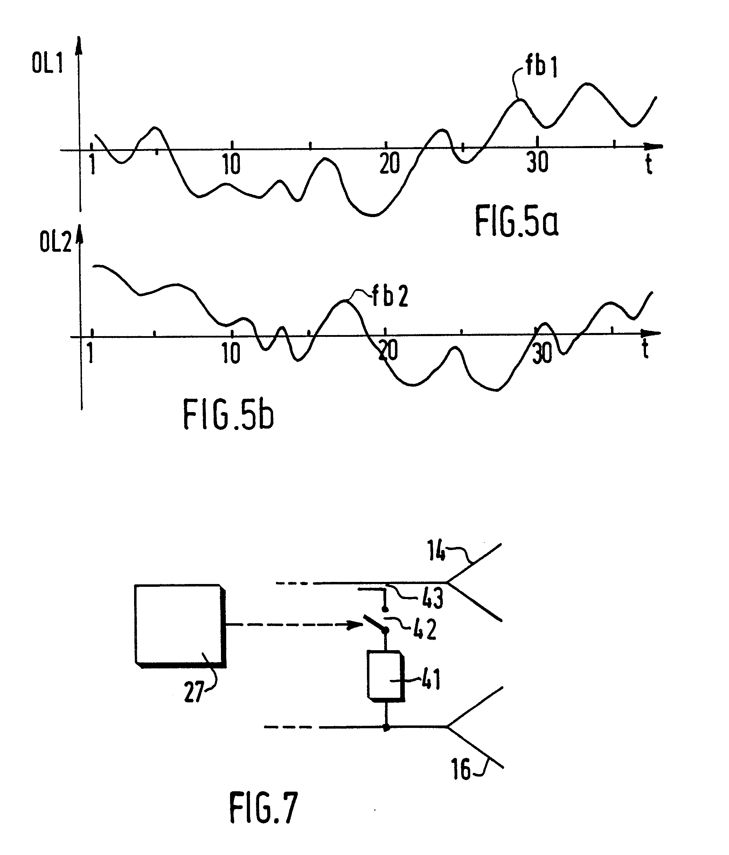

Sur la figure 2, on a représenté l'hodographe $H_2$ du vecteur $\vec{O}S$ pour un radioaltimètre FM/CW dans lequel la fréquence émise suit une loi à peu près linéaire, de l'instant $t_0$ (fréquence $f_0$) à l'instant $t_{31}$ - (fréquence $f_{31}$), les instants successifs $t_0$ à $t_{31}$ étant représentés par leurs seuls indices 0, 1, 2,..., 31. En l'absence de bruit de phase, représenté par la zone Z sur la figure 1, la courbe H2 serait celle qui est décrite par le point A, c'est-à-dire sensiblement un cercle de centre O, non représenté. Il existe cependant des ondulations parasites, ces ondulations étant peu marquées sur la figure 2 en ce sens qu'il n'y a pas formation de boucles pour la courbe H2. Ceci signifie que le bruit, assimilable au vecteur $\vec{A}S$ non représenté, est faible et que la probabilité d'une multiplicité de zéros à la traversée des axes OL1, OL2 est faible. Sur la figure 2, on notera deux paires de zéros supplémentaires parasites, l'une à la travesée de la partie négative de l'axe OL1 entre les instants $t_4$ et $t_3$ et l'autre à la traversée de la partie négative de l'axe OL2 entre les instants $t_{10}$ et $t_{13}$, comme cela est bien visible sur les figures 3a et 3b où les indices qui repèrent les instants $t_0$ à $t_{31}$ sont indiqués en abscisses, régulièrement espacés. On notera que même dans le cas d'un signal de battement peu bruité comme représenté aux figures 2 et 3a, 3b, un altimètre classique à comptage de zéros indiquerait des zéros en excès et donc une distance h trop grande, conformément à la relation (5) ci-dessus. A titre de référence, on a représenté par la sinusoïde en trait interrompu 6, à la figure 3a, le signal de battement théorique pur, non bruité, qui est la projection du vecteur $\vec{O}A$ sur l'axe OL1. Les figures 4 et 5a, 5b représentent le cas où les erreurs de phase sont grandes et provoquent des ondulations plus profondes, allant jusqu'à la formation de boucles sur l'hodographe de la figure 4. La formation de boucles signifie que l'amplitude du vecteur de bruit $\vec{A}S$ devient comparable à celle du vecteur $\vec{O}A$ et que sa pulsation est plus élevée, environ dix fois plus grande dans l'exemple de la figure 4. La présence de boucles est favorable à la formation de paires de faux zéros. Sur la figure 4 ou sur les figures 5a et 5b, on dénombre 8 zéros, à la traversée de l'axe OL1, au lieu des 2 zéros qui doivent normalement mesurer une rotation de phase de $2\pi$ du signal de battement entre les instants $t_0$ (fréquence $f_0$) et $t_{39}$ (fréquence $f_{39}$), si l'on considère la traversée du seul axe OL1. Dans les altimètres à comptage de zéros connus, on n'utilise qu'un seul signal de battement $Fb_1$ représenté aux figures 3a et 5a et le comptage de zéros ne permet pas d'identifier les zéros parasites indiqués ci-dessus. Par contre, l'invention se propose de démoduler en même temps l'écho avec une oscillation en quadrature, OL2 qui fournit le signal représenté aux figures 3b et 5b, ce qui conduit à compter les zéros à la traversée des deux axes à raison de 4 par tour dans le plan OL1, OL2. En combinaison avec la caractéristique technique indiquée à la phase précédente, les calculs et le comptage nécessaires à la comptabilisation des zéros utiles sont effectués à partir de valeurs numériques des signaux de battement en quadrature $b_1$ et $b_2$ précités, tout en effectuant une corrélation entre les valeurs homologues dans le temps de $b_1$ et $b_2$. Pour que tous les zéros soient pris en compte, il convient d'échantillonner les valeurs des signaux $b_1$ et $b_2$ à une fréquence suffisamment élevée et au moins égale au double de la fréquence de rotation du vecteur de bruit $\vec{A}$ S. En pratique, comme cela apparait sur les figures 2 et 4, la fréquence d'échantillonnage est au moins égale à trente fois la fréquence des signaux de battement $fb_1$ et $fb_2$. Sur les figures 1 et 4 on peut considérer les repères 1 à 31, respectivement 1 à 39, comme les instants d'échantillonnage à des instants multiples de T, soit T, 2T,..., 31T, respectivemnet T, 2T,..., 39T.

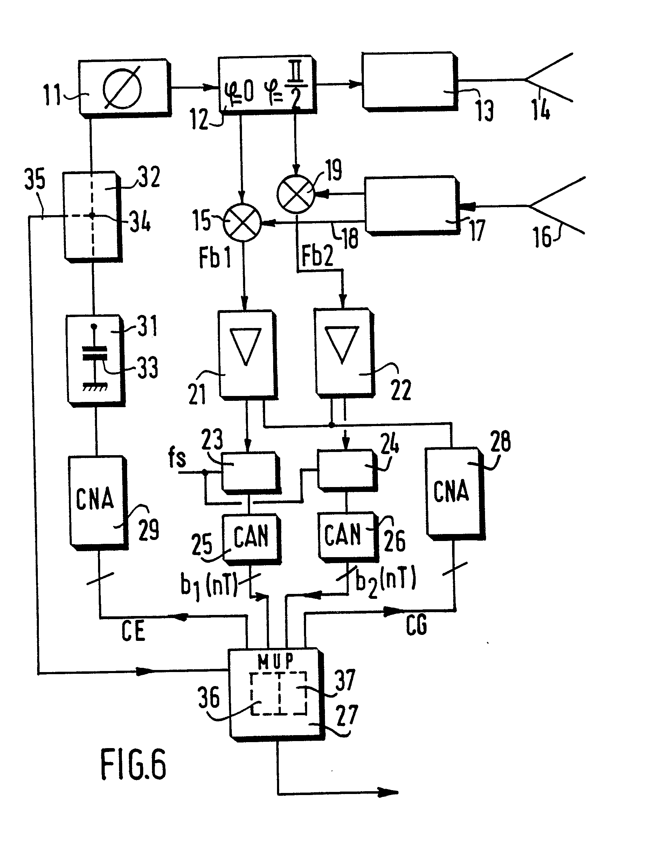

Un mode de réalisation préféré du radar selon l'invention est représenté à la figure 6. De façon connue, un oscillateur commandé en tension (VCO) 11 émet un signal hyperfréquence qui alimente, par l'intermédiaire d'un coupleur 12 à la fois l'étage de puissance d'émission (émetteur) 13 relié à l'antenne émettrice 14 et un premier mélangeur 15. L'émetteur 13 est de préférence relié à l'antenne d'émission 14 par l'intermédiaire d'un isolateur, non représenté, dans le cas où le rapport d'onde stationnaire de l'antenne 14 est trop élevé et risque de perturber le système ; il en est de même pour l'antenne de réception 16, reliée à un étage de traitement 17 qui, selon les besoins, peut remplir la triple fonction de filtre hyperfréquence, utile pour des altimètres en ambiance hostile, de limiteur de puissance, cette contrainte pouvant être imposée par exemple par des radars puissants et proches, et d'amplificateur hyperfréquence. L'étage 17 a, de façon connue, une sortie 18 reliée à une deuxième entrée du mélangeur 15. Selon l'invention, le radar de la figure 6 comporte un deuxième mélangeur 19 dont une première entrée est reliée à une deuxième sortie du coupleur 12 et une deuxième entrée à une sortie de l'étage 17. Les déphasages entre les signaux d'entrée des mélangeurs 15 et 19 sont conçus et les longueurs électriques des conducteurs reliés à ces entrées sont ajustées de telle façon que les signaux de battement $Fb_1$ et $Fb_2$ en sortie des mélangeurs 15 et 19 soient déphasés de $\pi/2$. Le mélangeur de $\pi/2$ est par exemple engendré à patir du coupleur 12 dont les sorties d'oscillation locale dérivées engendrent par rapport au signal d'émission un déphasage nul, respectivement égal à $\pi/2$ vers le mélangeur 15, respectivement 19, comme représenté sur la figure. Le même signal de sortie, ou des signaux de sortie de l'étage 17 différant en phase comme représenté sur la figure 6, peuvent être appliqués aux deuxièmes entrées des mélangeurs 15 et 19. Chaque mélangeur 15, 19 est suivi d'un amplificateur basse fréquence 21, 22 dont la bande passante couvre environ une octave, étant par exemple comprise entre 50 et 100 kHz, et dont la fréquence haute doit être compatible avec la vitesse de l'échantillonnage effectué en aval, c'est-à-dire au plus égale à la moitié de la fréquence d'échantillonnage $f_S$. La dernière contrainte indiquée est facile à satisfaire dans la mesure où il existe une contrainte plus sévère sur la fréquence $f_s$ déjà indiquée plus haut, selon laquelle cette fréquence d'échantillonnage est égale à plusieurs dizaines de fois la fréquence fb. Les amplificateurs 21 et 22, aussi identiques que possible, ont un gain variable suivant une dynamique assez importante, de l'ordre de 80 dB, fonction de la mission de l'altimètre et sont munis d'une commande automatique de gain qui peut être commune, comme représenté, ou séparée. Chaque amplificateur 21, 22 est relié à un échantillonneur-bloqueur 23, respectivement 24, suivi d'un convertisseur analogique-numérique (CAN) 25, respectivement 26, les quatre éléments 23 à 26 constituant des moyens de numérisation. Les CAN 25 et 26 ont une dynamique qui va par exemple de +128 à -128, soit 8 bits. On notera cependant que, pour la mesure de l'altitude, selon l'invention, une dynamique de plus ou moins 1 est suffisante, ce qui revient à se limiter à la seule connaissance du signe, comme on le verra ci-dessous. Les CAN 25 et 26 sont reliés à un microprocesseur (MUP) 27. Le microprocesseur fournit deux signaux numériques sur des conducteurs multiples, un signal CG à un convertisseur numérique-analogique (CNA) 28 et un signal CE à un convertisseur numérique-analogique 29. Le signal CG, après conversion en signal analogique en 28 commande automatiquement le gain des amplificateurs 21 et 22. L'amplitude moyenne des signaux $b_1(nT)$ et $b_2(nT)$ en sortie des CAN 25 et 26 est comparée à des seuils dans le microprocesseur 27 et, lorsque cette amplitude devient trop faible ou trop forte, une correction compensatrice est apportée à l'amplification en 21 et en 22, par le signal CG, ce qui constitue une boucle d'asservissement du gain des amplificateurs 21 et 22. Des variations de gain par sauts de 6 dB conviennent, ainsi qu'un convertisseur 28 à 4 bits. Le signal numérique CE commande quant à lui l'oscillateur 11 par l'intermédiaire du montage en série du CNA 29, d'un lisseur de courbe 31 et d'un organe de discrimination de fréquence 32. Le signal de sortie du CNA 29 a une forme en marches d'escalier, ce qui est défavorable à une commande correcte de l'oscillateur 11. En effet, pour que la mesure de l'altitude par comptage de zéros ait un sens, il faut éviter toute discontinuité dans la fréquence émise, qui provoquerait à son tour une rupture de continuité de mesure de la phase du signal de battement. Le lisseur de courbe 31 dont l'élément essentiel est par exemple un condensateur 33 a pour fonction de supprimer au premier ordre les variations brusques du signal de sortie du CNA 29 qui seraient assimilables à des discontinuités. D'autre part on peut prévoir que si la bande passante des amplificateurs 21 et 22 est d'une octave, la bande de fréquence du signal altimétrique qui les traverse peut subir des variations brusques d'une demi octave, ces considérations étant utiles pour la conception du CNA 29. Si l'oscillateur 11 est à peu près linéaire en fréquence en fonction de la tension de commande, alors la dynamique du CNA 29 devra être égale à la dynamique des altitudes mesurées, y compris la longueur résiduelle des cables. En effet, le condensateur 33 crée une intégration du courant et la fréquence de battement altimétrique fb est, à une constante multiplicative près, le produit de la pente de variation de fréquence et de l'altitude, comme l'indique la relation (4) ci-dessus. Si l'on veut par exemple mesurer des altitudes variant de 1 m à 10.000 m, la dynamique du CNA 29 devra être d'environ 27 bits si ce convertisseur est linéaire mais seulement de 5 bits si ce convertisseur numérique-analogique est à caractéristique exponentielle.

L'organe 32, sur la figure 6, symbolise des moyens pour repérer les instants $t_1$ et $t_2$ d'émission des fréquences initiale $f_1$ et finale $f_2$ par l'oscillateur 11, ces valeurs de fréquence déterminant entièrement la valeur de $\Delta\phi$ recherchée et donc la mesure de h en vertu de la relation (3) ci-dessus qu'on peut encore écrire :

$$h = \frac{\Delta\varphi}{\Delta f} \cdot \frac{c}{4\pi} \qquad\qquad (11)$$

L'organe 32 peut se réduire à une simple connexion 34 dans le cas où l'oscillateur commandé par tension 11 est fidèle ; il suffit alors de repérer les tensions $V_1$ et $V_2$ aptes à engendrer les fréquences $f_1$ et $f_2$ en sortie du VCO11, ce qui est effectué par un conducteur de retour 35 vers le microprocesseur 27 ; ceci permet de déterminer, dans le microprocesseur 27, les instants $t_1$ et $t_2$ marquant le début et la fin du comptage de zéros. Si l'on souhaite une plus grande précision ou si l'oscillateur 11 n'est pas suffisamment fiable on peut, selon une variante non représentée, disposer, en sortie du VCO11, des résonateurs hyperfréquences, reliés au microprocesseur 27 et indiquant à ce dernier directement les valeurs de fréquence émise. On notera qu'en toute rigueur un retour n'est pas indispensable vers le microprocesseur 27, pour la détermination des instants $t_1$ et $t_2$ ; ce retour serait en effet inutile dans le cas de l'utilisation d'un VCO très reproductible, en fabrication, est très fidèle, pour lequel aux fréquences $f_1$ et $f_2$ correspondraient des valeurs de tension de commande $V_1$ et $V_2$ dont les instants d'émission $t_1$ et $t_2$ en provenance du microprocesseur 27 sont faciles à déterminer. Cependant un oscillateur présentant de telles qualités est cher et d'autre part, un retour du signal émis vers le microprocesseur est toujours nécessaire pour pouvoir à tout instant ajuster de façon connue la pente de modulation de ce signal en fonction de l'altitude mesurée, ceci afin de maintenir les fréquences des signaux de battement $Fb_1$ et $Fb_2$ à l'intérieur des bandes passantes des amplificateurs 21 et 22.

De préférence, la dent de scie d'émission est triangulaire symétrique ce qui, par effet de moyenne entre rampe croissante et rampe décroissante, permet de s'affranchir de façon connue d'un effet Doppler éventuel. Ainsi, lorsque la fréquence haute $f_2$ est atteinte, la tension $V_2$ sur le conducteur 35 a pour effet d'inverser, en 27, le signe de la pente du signal logique CE, cette pente devenant négative. Lorsque la valeur $V_1$ est atteinte, en 34, cette pente redevient à nouveau positive et ainsi de suite.

La mesure de l'altitude est effectuée, conformément à la relation (3) ci-dessus, en comptant le nombre de tours effectué par le vecteur OS dans le plan OL1, OL2, pendant que la fréquence varie de façon continue de $f_1$ à $f_2$. Selon l'invention, le nombre de tours sera le résultat du comptage du quart du nombre de fois m que le point S aura traversé le demi-axe OL1 positif, le demi-axe OL2 positif, le demi-axe OL1 négatif et le demi-axe OL2 négatif en comptant +1 dans le sens trigonométrique direct et -1 dans le sens rétrograde. On a la relation :

$\Delta\phi = m.\frac{\pi}{2}$

La relation (3) peut alors s'écrire

6

$$h = \frac{m \cdot c}{8(f_2 - f_1)} \tag{6}$$

comme déjà indiqué ci-dessus, la relation (6) étant très voisine de la relation (5) plus classique aussi indiquée ci-dessus, selon laquelle on compte des demi-tours et non des quarts de tour.

En pratique, la différence : $f_2 - f_1$, est de l'ordre de 120 MHz et l'on peut écrire :

h = 0,3125 m en mètres     (13)

Pour identifier la traversée d'un demi-axe et le sens de travesée on compare, à chaque période T d'échantillonnage les signes de $b_1(nT)$, $b_1[(n-1)T]$, $b_2(nT)$, $b_2[(n-1)T]$, les mémorisations et les corrélations nécessaires étant effectuées dans des moyens de comparaison 36 internes au microprocesseur 27. Des moyens de calcul 37 permettent, à partir des comparaisons précédentes de calculer, par incrémentations-décrémentations successives au cours de la durée : $t_2 - t_1$, le nombre m.

De préférence, les moyens de comparaison associent aux signaux $b_1(nT)$ et $b_2(nT)$ les fonctions B1(nT) et B2(nT) respectivement qui valent +1 ou -1 selon que les signaux respectifs $b_1(nT)$ ou $b_2(nT)$ sont positifs ou négatifs, et à chaque période d'échantillonnage T, les moyens de calcul 37 effectuent les calculs suivants :

$B_1(nT) \cdot B_1[(n-1)T] = C_1(n, n-1)$

$B_2(nT) \cdot B_2[(n-1)T] = C_2(n, n-1)$

Si $C_1 = -1$ alors la valeur courante de m est incrémentée de la valeur algébrique : $B_1(nT) \cdot B_2(nT)$, ce qu'on écrit :

$B_1(nT) \cdot B_2(nT) + m \rightarrow m$

Si $C_2 = -1$ alors la valeur courante de m est incrémentée de la valeur : $-B_1(nT) \cdot B_2(nT)$, soit :

$-B_1(nT) \cdot B_2(nT) + m \rightarrow m$

Le cas le plus fréquent pour les paires d'échantillons successifs $b_1$ et $b_2$ est : $C_1 = C_2 = +1$, ce qui dénote l'absence de traversée d'un axe et donne une valeur inchangée pour m. Ces calculs, comparaisons et incrémentations sont effectués par le microprocesseur 27 entre les instants $t_1$ et $t_2$, la valeur obtenue en $t_2$, pour la fréquence d'émission $f_2$ étant la valeur à prendre en compte pour l'application des relations (6) ou (13), ces derniers calculs étant effectués, par exemple à chaque dent de scie d'émission, par le microprocesseur 27. Pour une dent de scie d'émission symétrique destinée à éviter les discontinuités du signal émis et permettant de s'affranchir de l'effet Doppler, la valeur de m à introduire dans les formules (6) ou (13) est la valeur moyenne entre les valeurs absolues de m obtenues pour la rampe positive et pour la rampe négative.

En effet, le sens de rotation du vecteur $\vec{O}S$ dépend du sens de modulation du VCO11. Or, c'est le même microprocesseur 27 qui fait le comptage des tours dans le plan des phases du vecteur $\vec{O}S$ et qui produit le signal de commande du VCO, à savoir le signal logique CE en sortie du microprocesseur. On peut donc, de préférence, pour éviter les chocs électriques liés à un retour brusque de $f_2$ à $f_1$, effectuer une descente lente de la fréquence de $f_2$ à $f_1$ avec un courant de décharge identique au courant de charge en inversant les signes de m.

Pour que le traitement de signal et les calculs indiqués ci-dessus se réalisent correctement, il est nécessaire que les signaux alternatifs de battement $Fb_1$ et $Fb_2$ traversent les amplificateurs analogiques basse fréquence 21 et 22. On choisit de préférence pour ces amplificateurs une bande passante assez large, d'une octave, pour ne pas être gêné par les bruits ou la linéarité de vobulation. Il n'est pas souhaitable d'aller au-delà, en largeur de bande, car cela augmenterait inutilement le bruit sur le signal utile.

La fréquence moyenne du signal de battement est :

$$fb = \frac{m}{4(t_2 - t_1)} \tag{14}$$

relation qui se déduit des relations suivantes déjà indiquées ci-dessus : $\Delta\phi = m\,\frac{\pi}{2}$

et :

$$fb = \frac{\Delta\varphi}{(t_2 - t_1)} \cdot \frac{1}{2\pi}$$

Le microprocesseur 27 commande la pente du VCO11 de la façon suivante :

Si la fréquence fb, qu'il est facile de calculer avec précison en 27 à chaque dent de scie, est supérieure à la fréquence centrale fc des amplificateurs 21 et 22, la valeur du courant de charge du VCO11 sera diminuée, à partir du signal CE, dans un rapport prédéterminé et inversement augmentée de façon analogue, si fb<fc. Dans le cas d'un altimètre devant asservir l'altitude d'un missile à une valeur prédéterminée, la pente peut être fixée a priori, la gamme d'altitudes mesurée étant égale à la bande passante des circuits 21 et 22 soit, lorsque la bande passante des circuits est égale à une octave : h maximum = 2h minimum.

Pour limiter la dynamique nécessaire pour les CAN 25 et 26 et le risque d'accrochage sur de faux signaux, le microprocesseur 27, par l'intermédiaire du CNA 28, commande, en phase de recherche par l'intermédiaire du signal CG, le gain maximum acceptable $G_M$ des amplificateurs 21 et 22 en utilisant, à défaut d'autre information, la relation qui lie le courant de charge i du VCO11 aux autres variables :

$$(AID + h) = \frac{K}{i} \qquad (15)$$

AID représentant la longueur résiduelle des cables, les constantes AID et K dépendant des antennes de l'altimètre pour le sol le moins réflecteur prévu au cahier des charges et compte tenu du fait que le gain $G_M$ recherché doit être proportionnel à $h^2$. Dès qu'un signal identifiable est présent à la sortie des amplificateurs 21 et 22, le microprocesseur 27 commande un gain identique, sur les deux amplificateurs 21 et 22, et tel que le signal le plus fort soit de l'ordre de la moitié de la capacité des convertisseurs 25 et 26.

Selon l'invention le microprocesseur 27 est utilisé, de préférence, pour commander la pente de vobulation du signal émis ; ceci permet une recherche de l'altitude au démarrage beaucoup plus rapide que selon le procédé classique. Dans l'art connu, on effectue une série de balayages complets, allant de $f_1$ à $f_2$ avec un courant i décroissant dans le rapport $1/\sqrt{2}$ à chaque nouveau balayage jusqu'à ce qu'on identifie une fréquence comptable passant par l'amplificateur basse fréquence 21. Le microprocesseur 27 permet une recherche où le temps de comptage est constant et par exemple égal à 3,6 ms, ce qui correspond à un comptage m = 1000 au centre de l'amplificateur basse fréquence 21 supposé avoir une bande de fréquence comprise entre 50 et 100 kHz. Toutes les 3,6 ms, la pente est divisée dans le rapport $1/\sqrt{2}$ et le compteur de m remis à zéro. Ce processus est continué jusqu'à ce qu'on obtienne un signal identifiable. La dynamique de recherche d'altitude, supposée de 10.000 est alors explorée environ 1400 fois plus vite que de la façon classique indiquée ci-dessus et cette recherche ne dure que 0,1 s environ.

Outre la précision sur l'altitude que procure l'invention par mesure continue de la phase comme indiqué ci-dessus, il est possible d'améliorer encore cette précision, en réduisant l'incertitude du comptage au début et à la fin de la mesure de m.

Supposons que l'on désire un altimètre ayant une précision de 0,3 m ou 1 ‰ (un pour mille) selon ce qui est le meilleur. L'incertitude du comptage est au plus de 1 au début et à la fin de la mesure. Pour obtenir une précision de 1 ‰ sur une mesure, il faut donc compter m = 2000. Avec les hypothèses de : $f_2-f_1$ = 120 MHz, et fb = 70 kHz on otbient :

h = 2000 × 0,3125 = 625 m

et

$$\Delta t = t_2 - t_1 = \frac{2000}{4 \cdot 70.000} = 0,00714 \ s$$

Si on accepte d'obtenir la mesure de l'altitude avec un léger retard, par exemple 0,1 s, on notera qu'il est possible d'effectuer, avec les hypothèses ci-dessus, 14 mesures indépendantes pendant ce délai ce qui permet, en faisant la moyenne $m_m$ de ces 14 mesures de ramener l'erreur probable de 1 ‰ à 0,27 ‰. Aux altitudes inférieures à 625 m, l'erreur sera supérieure en valeur relative mais le nombre de mesures sera plus important et donc la précision liée à la méthode de mesure sera meilleure.

D'autre part, si l'on souhaite mesurer des altitudes élevées, de l'ordre de 10.000 m, il convient de choisir, pour la vobulation, une fréquence haute $f_3$, nettement moins élevée que la fréquence $f_2$ qui conduit à la valeur : $f_2-f_1$ = $\Delta f$ = 120 MHz indiquée ci-dessus. En effet les calculs, dans le microprocesseur, sont limités à un certain nombre de bits, par exemple 12 bits. La valeur maximale comptable est alors elle-même limitée à 4096 et la valeur de $\Delta f$, qui se déduit immédiatement de la formule (6) ci-dessus, s'obtient en donnant à m et à h leurs valeurs maximales :

$\Delta f = f_3-f_1 = \frac{mc}{8h} = 15,36$ MHz

A un incrément de 1 pour m correspond un pas altimétrique de 2,44 m. On peut donc mesurer une première plage d'altitudes comprises entre 0 m et 1280 m avec une valeur $\Delta F = f_2-f_1$ = 120 MHz puis une deuxième plage d'altitudes comprises entre 1280 m et 10.000 m avec une valeur $\Delta F = f_3-f_1$ = 15,36 MHz. Pour ces mesures d'altitude, la plus mauvaise précision est obtenue au moment de la commutation, vers 1281 m ; le comptage m est alors de 525 en un temps de 0,002 s, soit 54 échantillons indépendants en 0,1 s ; l'erreur probable de 2,525 sera donc divisée par : $\sqrt{54}$ = 7,3 et ramenée à 0,52 ‰ environ, ce qui est acceptable. On peut ainsi simplifier la tâche du microprocesseur en choisissant des repères de fréquence intermédiaires, tels $f_3$, aux altitudes élevées.

Pour certains types de sols l'écho reçu est très fortement modulé en amplitude ou momentanément absent pendant des périodes plus ou moins longues. Des disparitions de signal d'écho se produisent notamment pour un vol stationnaire au-dessus d'une étendue d'eau. Selon une variante, le microprocesseur 27 contrôle à tout instant la somme des amplitudes absolues des deux signaux $b_1(nT)$ et $b_2(nT)$, soit : $|b_1(nT)| + |b_2(nT)|$.

Dès que cette somme est inférieure à un niveau S jugé comme le minimum acceptable en fonction du matériel utilisé, ce minimum étant supérieur au bruit de l'amplificateur 21, le microprocesseur cesse d'accroître m et évalue le pourcentage du temps d'horloge pendant lequel cet ou ces arrêts auront lieu entre $f_1$ et $f_2$.

Si ce pourcentage est élevé, supérieur à 10 % par exemple, le microprocesseur annule cette mesure.

Si ce pourcentage est faible, inférieur à 10 % par exemple, mais répétitif à toutes les mesures, le microprocesseur calculera la valeur de h par extrapolation en supposant que, pendant les périodes d'absence de signal d'écho, m a varié par exemple linéairement en fonction du temps ou selon toute autre loi prédéterminée.

Si enfin le pourcentage est élevé et répétitif, le microprocesseur peut déclencher un signal d'alarme tout en continuant de fournir une estimation assez peu précise de l'altitude.

Pour en revenir à la précision du radioaltimètre, on notera que cette dernière dépend principalement de l'estimation des fréquences $f_1$, $f_2$ et $f_3$. Pour s'affranchir de l'imprécision et des variations qui peuvent affecter les valeurs $f_1$, $f_2$ et $f_3$ on peut, selon une variante de l'invention équiper le radioaltimètre d'une ligne à retard interne, comme représenté à la figure 7. La ligne à retard 41 est reliée par une extrémité au conducteur d'antenne réceptrice 16 et par l'extrémité opposée au conducteur d'antenne émettrice 14 par l'intermédiaire du montage en série d'un interrupteur 42 et d'un coupleur 43. La fermeture du commutateur 42 est commandée périodiquement à partir du microprocesseur 27, par exemple à raison d'une fois par seconde. On suppose que les valeurs de $f_1$, $f_2$ et $f_3$ sont données de façon approchée mais répétitive à court terme par des seuils de tension à l'entrée de l'oscillateur 11. Soit $h_0$ la valeur connue et stable de la ligne à retard de référence 41 ; on peut écrire, en vertu de la formule (12) :

$$h_0 = \frac{m_0 c}{8 \Delta f} \quad (16)$$

et, en combinant les formules (6) et (16) :

$$h = \frac{m}{m_0} \eta_0$$

Il reste dès lors à obtenir la valeur de $m_0$ avec une précision suffisante. Il peut se faire que la longueur $h_0$ de la ligne à retard 41 ne soit pas suffisante pour que l'erreur sur $m_0$ soit négligeable. Dans ce cas on peut donner à $m_0$ une valeur non entière formée de la partie principale entière comptée et de l'estimation temporelle, ramenée à des fractions de $\pi/2$, de la position de la commutation de tension $f_1$ ou $f_2$ par rapport aux comptages de $m_0$ immédiatement avant et immédiatement après la commutation de tension. Cette opération est possible sur le signal de la ligne à retard parce qu'il est ponctuel et non fluctuant. La valeur de $m_0$ étant connue à très peu près, tout écart trop important par rapport à cette valeur doit actionner un indicateur signalant que l'altimètre n'est pas en état de bon fonctionnement.

## Revendications

1. Système radar du type à modulation de fréquence, fournissant à une antenne émettrice une onde continue dont la fréquence f varie de façon à peu près linéaire d'une fréquence inférieure $f_1$ à une fréquence supérieure $f_2$ telles que $f_2 - f_1 = \Delta f$, comportant un récepteur homodyne relié à une antenne réceptrice pour fournir un premier signal de battement $Fb_1$ entre ondes émise et reçue après réflexion, conçu pour la mesure d'altitude h par mesure de la rotation totale de phase dudit signal de battement $Fb_1$ pendant la durée $\Delta t$ de chaque excursion $\Delta f$ de la fréquence émise, caractérisé en ce qu'il comporte en outre des moyens de réception pour fournir un deuxième signal de battement $Fb_2$ déphasé de $\pi/2$ par rapport audit premier signal $Fb_1$ ainsi que des moyens de numérisation pour échantillonner les signaux $Fb_1$ et $Fb_2$ à une fréquence $1/T$ de l'ordre de plusieurs dizaines de fois celle des signaux $Fb_1$ et $Fb_2$ et pour convertir ces derniers en signaux numériques $b_1(nT)$ et $b_2(nT)$ respectivement, des moyens de comparaison pour comparer, à chaque période T d'échantillonnage les signes de $b_1(nT)$, $b_1[(n-1)T]$, $b_2(nT)$, $b_2[(n-1)T]$ et des moyens de calcul pour calculer à partir desdites comparaisons des incréments et pour déduire, par incrémentations-décrémentations successives au cours de la durée $\Delta t$, le nombre de fois m, compté algébriquement, que le vecteur électrique Fb dont $Fb_1$ et $Fb_2$ sont les composantes sur deux axes perpendiculaires a effectué de quarts de tour dans un sens trigonométrique donné, m étant proportionnel à l'altitude à mesurer, conformément à la relation :

$$h = \frac{mc}{8(f_2 - f_1)}$$

2. Système radar conçu pour la mesure d'altitude selon la revendication 1, caractérisé en ce que lesdits moyens de comparaison associent aux signaux $b_1(nT)$ et $b_2(nT)$ les fonctions $B_1(nT)$ et $B_2(nT)$ respectivement qui valent +1 ou -1 selon que les signaux respectifs $b_1(nT)$ ou $b_2(nT)$ sont positifs ou négatifs, et qu'à chaque période d'échantillonnage T lesdits moyens de calcul effectuent les calculs suivants :

$B_1(nT).B_1[(n-1)T] = C_1(n,n-1)$

$B_2(nT).B_2[(n-1)T] = C_2(n,n-1)$

si $C_1 = -1$, alors $B_1(nT).B_2(nT) + m \rightarrow m$

si $C_2 = -1$, alors $-B_1(nT).B_2(nT) + m \rightarrow m$

3. Système radar radioaltimétrique selon la revendication 1 ou 2, caractérisé en ce que lesdits moyens de comparaison et lesdits moyens de calcul font partie intégrante d'un microprocesseur.

4. Système radar radioaltimétrique selon la revendication 3, caractérisé en ce que lesdits moyens de calcul sont conçus pour calculer une valeur non entière de m en effectuant la moyenne $m_m$ entre plusieurs valeurs entières successives mesurées de m.

5. Système radar radioaltimétrique selon la revendication 3 ou 4, caractérisé en ce que pour la mesure des altitudes appartenant à la plage d'altitudes les plus hautes, une troisième fréquence $f_3$ du signal émis est prise en compte comme fréquence supérieure par le microprocesseur, la valeur de $f_3$ étant comprise entre $f_1$ et $f_2$.

6. Système radar radioaltimétrique selon l'une des revendications 3 à 5, caractérisé en ce que ledits moyens de calcul sont conçus pour contrôler à tout instant la somme :

$|b_1(nT)| + |b_2(nT)|$

et, lorsque cette somme est inférieure à un seuil S pendant la mesure de m, pour évaluer le pourcentage du temps d'horloge pendant lequel ce seuil S est franchi vers le bas entre les fréquences d'émission $f_1$ et $f_2$ (respectivement $f_3$) et pour en déduire soit l'annulation de la mesure de m, soit une valeur approximative de m.

7. Système radar radioaltimétrique selon l'une des revendications 3 à 6, caractérisé en ce qu'il comporte en outre une ligne à retard interne de longueur équivalente $h_0$ qui est commutée périodiquement à partir du microprocesseur et pour laquelle le comptage de zéros afférent $m_0$ est effectué périodiquement, l'altitude h étant calculée par lesdits moyens de calcul conformément à l'expression :

$h = \frac{m}{m_0} h_0$

8. Système radar radioaltimétrique selon l'une des revendications 2 à 7, caractérisé en ce que la modulation de fréquence est successivement croissante puis décroissante pour mettre en évidence et mesurer ou annuler en moyenne l'erreur causée par un éventuel effet Doppler.

EP 0 350 095 A1

FIG.1

FIG.2

FIG.3a

FIG.3b

FIG.4

1-III-PHF 88-566

OL1

fb1

1     10     20     30     t

FIG.5a

OL2

fb2

1     10     20     30     t

FIG.5b

14

43

42

41

27

16

FIG.7

FIG.6

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | L'ONDE ELECTRIQUE, vol. 51, no. 5, mai 1971, pages 406-410, Paris, FR; J.P. LANDROT: "Radioaltimètre à modulation de fréquence" * Pages 406-407, paragraphes 2,3; figures 1,2 * | 1,2,8 | G 01 S 13/34 |
| Y | GB-A-1 279 582 (MULLARD) * En entier * | 1,2,8 | |
| A | FR-A-2 464 483 (LCT) * Page 2, ligne 12 - page 9, ligne 18; figures 1,2 * | 1-4,6 | |
| A | GB-A- 820 399 (MARCONI) * Page 2, ligne 121 - page 3, ligne 109; figure 1 * | 1 | |
| A | US-A-4 107 681 (R.E. ROBERTSON et al.) * Résumé; figures 1-4 * | 1,7,8 | |
| A | IEEE SOCIETY ON MICROWAVE THEORY AND TECHNIQUES: NEWSLETTER, no. 112, 1985, pages 32-39, TRW ESG, Redondo Beach, California, US; G. SCHAFFNER: "Aircraft small radars" * Pages 34,38, paragraphe: "Altimeters"; figure 7 * | 1,7 | DOMAINES TECHNIQUES RECHERCHES (Int. Cl.5) G 01 S |
| A | US-A-4 620 192 (J.D. COLLINS) * Colonne 2, ligne 49 - colonne 5, ligne 58; figure 1 * | 1,8 | |

Le présent rapport a été établi pour toutes les revendications

| Lieu de la recherche | Date d'achèvement de la recherche | Examinateur |
|---|---|---|
| LA HAYE | 05-10-1989 | VAN WEEL E.J.G. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)